# EUROPEAN PATENT APPLICATION

(11) **EP 1 850 569 A1**
(43) Date of publication of application: **31.10.2007**
(21) Application number: 06300403.0
(22) Date of filing: 25.04.2006
(51) Int. Cl.: H04M 1/725, H04M 1/60

(54) **Module for transferring a warning signal to headphones of an audio player**

(71) Applicant: International Business Machines Corporation, Armonk, NY 10504 (US)
(72) Inventor: Picon, Joaquin, 06700, ST LAURENT DU VAR (FR); Marmigere, Gerard, 06340, Drap (FR); Clement, Jean-Yves, 06640, Saint-Jeannet (FR); Bauchot, Frederic, 06640, Saint-Jeannet (FR)
(74) Representative: Etorre, Yves Nicolas

(57) **Abstract**

A module (150) for transferring a warning signal emitted by a communications device (130) to a user of a media broadcasting device (100), the module comprising:
- a receiver (220,240) for receiving the warning signal;
- a connection (160,180) for interposing the module between the media broadcasting device and a head-phone (120);
- a switch (250) for transferring a received warning signal to the head-phone.

## Description

### Field of the invention

The present invention relates to a method and apparatus to enable a user to interrupt the supply of a service, particularly but not exclusively to enable a user to choose to listen to a telephone during an MP3 session.

### Background of the invention

MP3 players are very much the device to have and users are often "plugged in" to listen to music. The music can be heard through headphones which are connected by a wire or cable to the MP3 player. When the user is plugged in and music is playing the user cannot hear things which are going on in the vicinity.

In particular, if a mobile phone rings the user will not hear the ringing and may miss important calls. By setting ring volume as high as possible and reducing the MP3 volume it may be possible to hear the phone ring if it is close by. However, this is not usually what happens.

There have been a number of attempts to solve this problem. For example, WO 03/034782 discloses a modular head set which has more than one operating modes. For example, by using Bluetooth and/or wired connections. For a user to benefit from the obvious advantages of the invention, they must purchase a new headset. This adds to the cost of having an MP3 player. Another disadvantage is that the substitution of one functionality for another as provided to the user requires a positive action from the user on a key pad.

One object of the present invention, is to provide a system which solves at least some of the problems of the prior art.

### Summary of the invention

The present invention is directed to the method and system as defined in the independent claims.

More particularly the present invention discloses a module for transferring a warning signal emitted by a communications device to a user of a media broadcasting device, the module comprising: a receiver for receiving the warning signal; a connection for interposing the module between the media broadcasting device and a head-phone; and a switch for transferring a received warning signal to the head-phone.

Further more particularly the present invention discloses a method for transferring a warning signal, emitted by a communication device, to a user of a media broadcasting device, wherein the method comprises the steps of: connecting a module for receiving the warning signal to the media-broadcasting device, attaching a head-phone to the media-broadcasting device, using the module as the connector between the head-phone and the media-broadcasting device, and providing the module with receiver and transfer means, for receiving the warning signal emitted by the communication device and for transferring the warning signal to the user, using the head-phone.

The advantage of this is that it is not necessary to change any existing equipment. It is necessary only to attach the module between the normal MP3 headphones and the MP3 player to enable the user to know and react to any incoming telephone call. The module is simple and inexpensive and the user does not have to replace any existing equipment.

In addition, the module knows when a telephone call is received and the user may then choose which action to take next, for example, to answer the call or not by picking up the phone. Alternately if the module includes a microphone the user may actually receive the call through the module.

### Brief description of the drawings

Figure 1 is a diagram showing the elements of the present invention in simplified terms;
Figure 2 is a detailed diagram of the figure 1 module to explain the functionality of the invention in greater detail;
Figure 3 is a flow chart showing the operation of the module in use.

### Detailed description from template

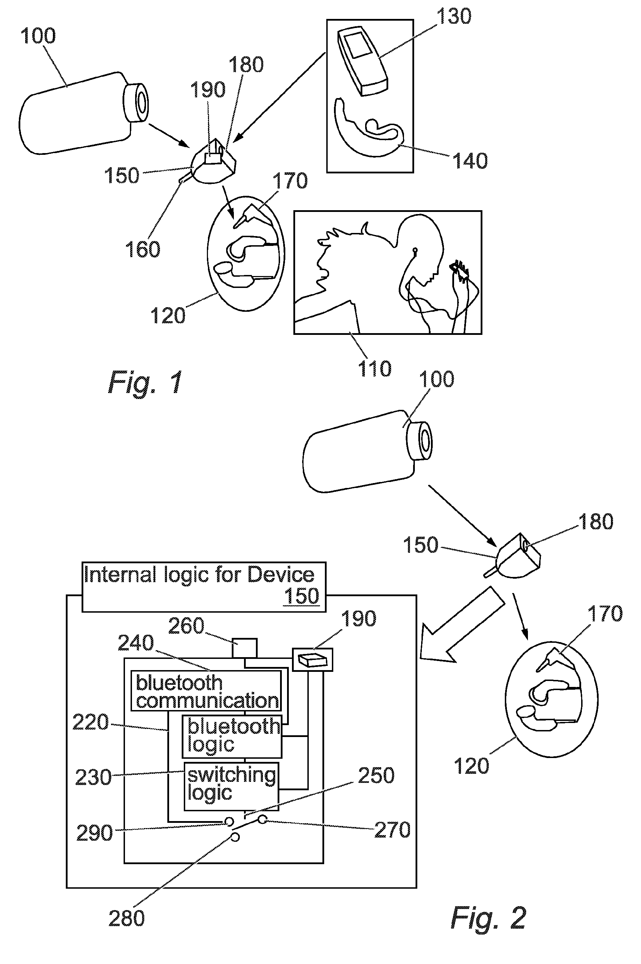

Figure 1 shows an MP3 player 100, which is used to provide an auditory medium to a user 110 through a headset 120. The auditory medium may be music, audio for a video or any other source. The MP3 player is merely an example and other media broadcasting devices with headphones are equally as relevant to the invention. The user also has a mobile telephone 130 (or other device that provides a communication or telephony service or a similar wireless device) which has a Bluetooth earpiece or headset 140.

The present invention proposes the use of a module 150. The module comprises a jack plug connector which can be connected into the MP3 player 100. The connector may be a different type if necessary as long as it corresponds within the plug 170 for headphones 120 and can plug into device 100 (whatever type it might be). The headphone plug 170 is then plugged into a female connector 180 in the module thus re-establishing the audio connection between device 100 and the headphones 120. The module includes a button 190, the function of which will be described in greater detail with respect to the internal functioning of the module.

The module may include a microphone on any surface thereof, to allow the user to speak into the module. Again the function of this will be described in greater detail below. The module may be of any shape, size, colour or form.

Referring now to figure 2, details of the internal logic of module 150 will be described. The module includes Bluetooth logic block 220, which is connected to switching logic block 230 and a Bluetooth communication block 240. The function of each block will be described in greater detail below. The switch 190 is connected to the switching logic block and the Bluetooth logic block for activating, deactivating or carrying out a particular function as will be described below. A microphone 260 may be included and connected to the Bluetooth logic and communication blocks. The switch logic 230 operates a switch 250 which can change the connection of the headset 270 from the MP3 player connection 280 to the telephone connection 290.

The following description now sets out operation of the module. Prior to or during listening to content from the MP3 player, the Bluetooth logic communication function is synchronised with the telephone. This is achieved by pushing button 190 in a first manner (For example two pushes might be used to synchronise the Bluetooth with the telephone). This is due to the fact that the module only includes one button which has several functions. It would be possible to have more than one button each for a different function but this would increase the cost of a module which is clearly undesirable.

Once the telephone and module Bluetooth are synchronised, the user can listen to or continue listening to the output from the MP3 player. The switch is set to the MP3 connection 280 and the user listens to music or other content from the MP3 player. A telephone call is received at the telephone and the telephone notifies the Bluetooth in the module. The Bluetooth logic and communication blocks activate the switching logic to switch the switch 250 to connector 290. In this way, the user can now hear the telephone ringing or hear a warning of a call instead of hearing the content from the MP3 player.

The user now has a number of options, including:
1. Pick up and answer the telephone. The Bluetooth logic may then activate the switch to connect with connector 280 to the MP3 player.
2. The user can choose to ignore the warning signal and may press button 190. The pressing of the button in a second manner in this circumstances being operable to inform the switching logic to switch the switch back to the audio connection 280.
3. If the module includes a microphone the user can press button 190 in a third manner to receive the call actually at the module. The Bluetooth makes the connection and transfers the audio from the telephone via the headphones to the user and the voice from the microphone to the telephone caller via the Bluetooth and telephone in a known manner.

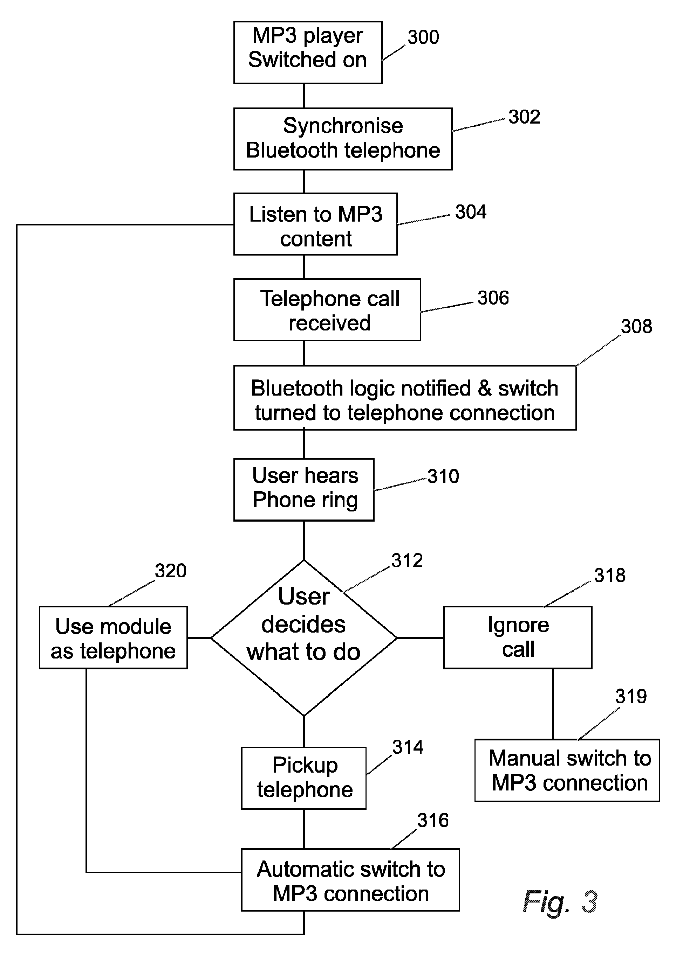

Referring now to figure 3, the steps of the process for using the module and for carrying out the invention are described.

The MP3 player is switched on and the module connected (step 300). The Bluetooth of the module is synchronised with the telephone either during or before the user listens to the MP3 content (step 302). The user then continues to listen to the MP3 content (step 304).

A telephone call is then received (step 306). The Bluetooth logic block is notified by the Bluetooth communication Block and the switch is turned to the telephone connection (step 308). So that, the user can hears the ring of the phone (step 310) .

The user then makes the decision of what to do (step 312). The user may ignore the call (step 318) and manually switch the switch back to the MP3 connection (step 319) and continue listening to the MP3 content (step 304). The user may stop listening to the MP3 player, remove the headset and pick up to telephone (step 314). Once the telephone call is completed, the Bluetooth recognises there is no connection to the phone and the switch is automatically switched back to the MP3 connection (step 316).

Alternatively, the user can answer the call and communicate to the caller using the module as a telephone or intermediary to the telephone (step 320). The switch is automatically switched back to the MP3 connection after the call is completed (step 316) .

While the invention has been particularly shown and described with reference to a preferred embodiment, it will be understood that various changes in form and detail may be made therein without departing from the spirit, and scope of the invention.

## Claims

1. A module (110) for transferring a warning signal emitted by a communications device (130) to a user of a media broadcasting device (100), the module comprising:
- a receiver (220, 240) for receiving the warning signal;
- a connection (160, 180) for interposing the module between the media broadcasting device and a head-phone (120);
- a switch (250) for transferring a received warning signal to the head-phone.

2. The module of claim 1, wherein the communications device is a mobile telephone (130) and the warning signal is an incoming call to the telephone.

3. The module of claim 1 or claim 2, wherein the receiver is a Bluetooth receiver (220, 240).

4. The module of any preceding claim, wherein the module further includes an actuator for effecting an action after the warning signal has been received.

5. The module of any preceding claim, wherein the actuator can be used to allow the user to ignore the warning signal.

6. The module of any preceding claim, wherein the actuator can be used to synchronise the module with the communications device.

7. The module of any preceding claim, wherein the warning signal automatically switches the switch when received.

8. The module of any preceding claim, wherein the module further includes a microphone to allow the user to send communications to the communications device.

9. A method for transferring a warning signal, emitted by a communication device, to a user of a media broadcasting device, wherein the method comprises the steps of:
- connecting a module for receiving the warning signal to the media-broadcasting device (300),
- attaching a head-phone to the media-broadcasting device, using the module as the connector between the head-phone and the media-broadcasting device (300),
- providing the module with receiver and transfer means, for receiving the warning signal emitted by the communication device and for transferring the warning signal to the user, using the head-phone (308, 310).

10. The method of claim 9, further comprising synchronising the module with the communications device (302).

11. The method of claim 9 or claim 10, further comprising identifying the termination of the warning signal; and re-transferring an output of the media broadcasting device to the head-phone (312, 314, 316, 318, 320).
